(19) Europäisches Patentamt
European Patent Office
Office européen des brevets

(11) **EP 3 874 966 B1**

(12) **EUROPEAN PATENT SPECIFICATION**

(45) Date of publication and mention
of the grant of the patent:
**08.03.2023 Bulletin 2023/10**

(21) Application number: **19872252.2**

(22) Date of filing: **16.01.2019**

(51) International Patent Classification (IPC):
***A23K 50/80*** (2016.01)

(52) Cooperative Patent Classification (CPC):
**A23K 10/26; A23K 20/147; A23K 20/158;
A23K 20/174; A23K 50/80**

(86) International application number:
**PCT/CN2019/071975**

(87) International publication number:
**WO 2020/098149 (22.05.2020 Gazette 2020/21)**

(54) **ZERO-STARCH NO-BINDER SHRIMP FRY STARTER COMPOUND FEED AND PREPARATION METHOD THEREFOR**

STÄRKEFREIES, BINDEMITTELFREIES KRABBENBRUTSTARTERMISCHFUTTER UND HERSTELLUNGSVERFAHREN DAFÜR

ALIMENT COMPOSÉ DE DÉMARRAGE POUR ALEVINS DE CREVETTES SANS LIANT ET SANS AMIDON ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.09.2021 Bulletin 2021/36**

(73) Proprietor: **Guangdong Yuequn Biotechnology
Co., Ltd.
Jieyang City, Guangdong 515500 (CN)**

(72) Inventors:
• **HONG, Yuequn
Jieyang city, Guangdong 51500 (CN)**
• **HONG, Yucong
Jieyang city, Guangdong 51500 (CN)**
• **HONG, Yujian
Jieyang city, Guangdong 51500 (CN)**
• **SUN, Kaihui
Jieyang city, Guangdong 51500 (CN)**

• **ZHAO, Shuyan
Jieyang city, Guangdong 51500 (CN)**
• **WANG, Xiaoshan
Jieyang city, Guangdong 51500 (CN)**
• **CAI, Xiaomin
Jieyang city, Guangdong 51500 (CN)**

(74) Representative: **Murgitroyd & Company
Murgitroyd House
165-169 Scotland Street
Glasgow G5 8PL (GB)**

(56) References cited:
WO-A1-2014/165936       CN-A- 102 178 120
CN-A- 104 664 157       CN-A- 105 231 088
CN-A- 105 231 088       CN-A- 107 518 210
CN-A- 107 518 210       CN-A- 107 950 760
CN-A- 108 065 132

EP 3 874 966 B1

**Description**

**TECHNICAL FIELD**

The present invention relates to the field of starter feeds, and particularly relates to a zero-starch and binder-free starter compound feed for shrimp and the preparation method thereof.

**BACKGROUND**

Shrimp are arthropods that live in the water, crustaceans of the phylum Arthropoda, including many types such as Antarctic red shrimp, freshwater shrimp, river shrimp, grass shrimp, prawn, and lobster. Shrimp have high nutritional value for dietary therapies; they can be cooked by steaming, frying, etc., and can be used in traditional Chinese medicine.
Starter feeds are rations for the first feeding stage of young animals. At present in the aquaculture industry, starter feeds for shrimp generally include egg yolk, soybean milk and microalgae. Due to poor water resistance in water, these feeds will quickly break up after thrown into water such that most of the feeds cannot be eaten by the shrimp, resulting in low utilization of the feeds and large nutrition loss, affecting the growth rate of shrimp due to insufficient nutrition from the feeds, and thereby failing to achieve the goal of rapid growth and high yield. Also, since components of the feeds are mainly organic substances, the uneaten feeds are likely to pollute the water and deteriorate the aquaculture environment.
For traditional artificial compound feeds, starch is essential as an additive and binder, and will be used in combination with coating materials to ensure the formation and hardening of pellet feeds. However, aquatic animals are "congenital diabetics" due to poor starch digestion and utilization that they cannot fully utilize starch, resulting in waste.
Chinese patent publications: CN 107 518 210 A discloses a preparation method of a starch-free shrimp seed microcapsule opening material; CN 108 065 132 A discloses a fish opening feed comprising flour 15 to 30%; and CN 105 231 088 A discloses a fish feed.

**SUMMARY**

One object of the present invention is to provide a zero-starch (flour) and binder-free starter compound feed for shrimp, which has high water stability, selective diffusivity, suitable suspensibility, high palatability and high attracting performance, and improves feed intake.
The zero-starch and binder-free starter compound feed for shrimp of the present invention is characterized in that it is produced by the following method:

   providing ingredients, the ingredients comprising by mass, 15-50% of Antarctic krill meal, 10-25% of enzymatically hydrolyzed protein, 3-10% of bloodworm, 2-5% of beer yeast powder, 5-8% of earthworm, 4-10% of fairy shrimp, 5-10% of fresh squid, 2-10% of sandworm, 1-3% of phospholipid, 3-10% of oyster, 1-2.5% of fish oil, 1-2% of vitamin mixture, 1-3% of mineral element mixture, 2-4% of immune enhancer, 1-5% of EPA, and 1-6% of DHA;

   pulverizing the ingredients, mixing evenly, adding water and stirring to give a mash; vacuum freeze drying the mash at -50°C to -100°C, and then homogenizing, expanding, spray drying, oven drying, sifting, and cooling to give the starter compound feed for shrimp;

   wherein the step of pulverizing the ingredients is performed by pulverizing to a size of 325 to 400 mesh using an ultrafine pulverizer and/or a colloid mill; and wherein

   the step of adding water and stirring to give the mash is performed by adding water and stirring for 10-20 minutes to give a mash containing by mass 25-35% of the ingredients.

Preferably, the ingredients comprises by mass 30% of Antarctic krill meal, 15% of enzymatically hydrolyzed protein, 6% of bloodworm, 3% of beer yeast powder, 6% of earthworm, 6% of fairy shrimp, 7% of fresh squid, 6% of sandworm, 2% of phospholipid, 6% of oyster, 1% of fish oil, 1% of vitamin mixture, 2% of mineral element mixture, 3% of chitin, 3% of EPA, and 3% of DHA.
The step of vacuum freeze drying at -50°C to -100°C is performed by vacuum drying at -80°C.
The step of expanding is performed by a micro-expansion with an expansion ratio of 16%.
The step of spray drying is performed with an inlet temperature of 175°C and an outlet temperature of 85°C.
The step of oven drying is performed with a drying temperature of 75°C to 125°C.
The immune enhancer may be chitin.

The vitamin mixture comprises per kilogram: 30 g of vitamin A, 2 g of vitamin D3, 60 g of vitamin E, 4.5 g of vitamin K3, 30 g of vitamin B1, 2 g of vitamin B2, 60 g of vitamin B6, 4.5 g of vitamin B12, 20 g of nicotinic acid, 20 g of calcium pantothenate, 0.15 g of biotin, 150 g of inositol, 4 g of folic acid, and 275 g of vitamin C, with the balance being corncob meal.

The vitamin mixture is prepared by weighing out the vitamins according to the above formula, mixing with the corncob meal, and stirring evenly.

The mineral element mixture comprises per kilogram: 20 g of copper sulfate, 100 g of ferrous sulfate, 35 g of zinc sulfate, 11 g of manganese sulfate, 0.55 g of cobalt chloride, 0.55 g of sodium selenite, 20 g of potassium dihydrogen phosphate, and 20 g of sodium dihydrogen phosphate, with the balance being zeolite powder.

The mineral element mixture is prepared by: oven drying the above mineral salts at 100°C for 2 hours to remove moisture in the mineral salts, pulverizing and passing through a 100-mesh standard sieve; weighing out the mineral salts that pass through the sieve according to the above formula, mixing with feed-grade zeolite powder, and stirring evenly.

It has been realized by the present invention that, without the addition of starch or other binders, by optimizing the selection and processing of ingredients (vacuum freeze drying, effectively controlling of dispersion of powders in solution, and use of micro-expansion that gives the compound feed desired physical properties), not only the product can be formed as microcapsule particles, but also the various nutrients will not be destroyed during processing and are balanced in the microcapsule particles. Furthermore, trophic structure, dissolution rate, suspensibility and other physical characteristics of the feeds have been comprehensively taken into consideration that, the feed exhibit the characteristics of bioactive feed in all aspects, has rich and balanced nutrients, higher attractivity and high digestibility, promoting growth and improving survival rate.

## DETAILED DESCRIPTION OF THE EMBODIMENTS

The following examples are intended to further illustrate the present invention, but not to limit the present invention.

An enzymatically hydrolyzed protein is a protein produced by using an enzyme, such as papain and/or neutral protease, to enzymatically hydrolyze animal viscera or leftovers, such as squid viscera.

The enzymatically hydrolyzed protein used in the following examples was produced by using papain to enzymatically hydrolyze squid viscera and drying.

Specifically, the enzymatically hydrolyzed protein could be produced by the following method: mixing fresh squid viscera (frozen squid viscera also applicable) with water according to a mass ratio of 1:1, followed by the addition of papain (6,000 IU for every gram of squid viscera) to allow enzymolysis to occur at 50°C and pH 7 for 12 hours to give a solution, and spray drying the solution to give the enzymatically hydrolyzed protein.

In the following examples:

The vitamin mixture comprised per kilogram 30 g of vitamin A, 2 g of vitamin D3, 60 g of vitamin E, 4.5 g of vitamin K3, 30 g of vitamin B1, 2 g of vitamin B2, 60 g of vitamin B6, 4.5 g of vitamin B12, 20 g of nicotinic acid, 20 g of calcium pantothenate, 0.15 g of biotin, 150 g of inositol, 4 g of folic acid, 275 g of vitamin C, and 337.85 g of corncob meal.

The vitamin mixture was prepared by weighing out the vitamins according to the above formula, mixing with the corncob meal, and stirring evenly.

The mineral element mixture comprised per kilogram: 20 g of copper sulfate, 100 g of ferrous sulfate, 35 g of zinc sulfate, 11 g of manganese sulfate, 0.55 g of cobalt chloride, 0.55 g of sodium selenite, 20 g of potassium dihydrogen phosphate, 20 g of sodium dihydrogen phosphate, and 792.9 g of zeolite powder.

Example 1:

Ingredients: the zero-starch and binder-free starter compound feed for shrimp comprised by mass, 30% of Antarctic krill meal, 15% of enzymatically hydrolyzed protein, 6% of bloodworm, 3% of beer yeast powder, 6% of earthworm, 6% of fairy shrimp, 7% of fresh squid, 6% of sandworm, 2% of phospholipid, 6% of oyster, 1% of fish oil, 1% of vitamin mixture, 2% of mineral element mixture, 3% of chitin, 3% of EPA (eicosapentaenoic acid), and 3% of DHA (docosahexaenoic acid).

All the ingredients were pulverized (pulverized via an ultrafine pulverizer or homogenized via a colloid mill; for example, the Antarctic krill meal, enzymatically hydrolyzed protein, beer yeast powder, phospholipid, vitamin mixture, mineral element mixture, chitin, EPA, and DHA were pulverized via an ultrafine pulverizer, while the bloodworm, earthworm, fairy shrimp, fresh squid, sandworm, oyster and fish oil were homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, and expanded (with an expansion ratio of 16%; the expansion ratio is calculated by: (expanded pellet volume - unexpanded pellet volume) / unexpanded pellet volume), spray dried (with an inlet temperature of 175°C and an outlet temperature of 85°C), oven dried (at a temperature of 75°C to 125°C), sifted, and cooled to give the starter compound feed for shrimp.

Comparative example 1:

The zero-starch starter compound feed for shrimp comprised by mass, 17% of fish meal, 17% of earthworm meal, 17% of superworm protein powder, 17% of black soldier fly larva meal, 17% of whey protein powder, 7% of beef tallow, 6% of coconut oil, 1% of multi-vitamin, and 1% of multi-mineral.

The starter compound feed for shrimp was produced by the following steps: The protein source ingredients were pulverized to 400-mesh fine powder, and completely mixed with the lipid source ingredients, multi-vitamin, and multi-mineral; water was added and stirred for 15 minutes to give a 30% mash (i.e., containing 30% by mass the ingredients), which was then homogenized, spray dried (with an inlet temperature of 230°C and an outlet temperature of 110°C), oven dried at 100°C, sifted, and cooled to give the starter compound feed for shrimp.

Comparative example 2:

Ingredients: the zero-starch and binder-free starter compound feed for shrimp comprised by mass, 30% of Antarctic krill meal, 15% of enzymatically hydrolyzed protein, 37% of bloodworm, 3% of beer yeast powder, 2% of phospholipid, 1% of fish oil, 1% of vitamin mixture, 2% of mineral element mixture, 3% of chitin, 3% of EPA, and 3% of DHA.

All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 3:

Ingredients: the zero-starch and binder-free starter compound feed for shrimp comprised by mass, 30% of Antarctic krill meal, 15% of enzymatically hydrolyzed protein, 37% of earthworm, 3% of beer yeast powder, 2% of phospholipid, 1% of fish oil, 1% of vitamin mixture, 2% of mineral element mixture, 3% of chitin, 3% of EPA, and 3% of DHA.

All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 4:

Ingredients: the zero-starch and binder-free starter compound feed for shrimp comprised by mass, 30% of Antarctic krill meal, 15% of enzymatically hydrolyzed protein, 37% of fairy shrimp, 3% of beer yeast powder, 2% of phospholipid, 1% of fish oil, 1% of vitamin mixture, 2% of mineral element mixture, 3% of chitin, 3% of EPA, and 3% of DHA.

All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 5:

Ingredients: the zero-starch and binder-free starter compound feed for shrimp comprised by mass, 30% of Antarctic krill meal, 15% of enzymatically hydrolyzed protein, 37% of flesh squid, 3% of beer yeast powder, 2% of phospholipid, 1% of fish oil, 1% of vitamin mixture, 2% of mineral element mixture, 3% of chitin, 3% of EPA, and 3% of DHA.

All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 6:

Ingredients: the zero-starch and binder-free starter compound feed for shrimp comprised by mass, 30% of Antarctic krill meal, 15% of enzymatically hydrolyzed protein, 37% of sandworm, 3% of beer yeast powder, 2% of phospholipid, 1% of fish oil, 1% of vitamin mixture, 2% of mineral element mixture, 3% of chitin, 3% of EPA, and 3% of DHA.
All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 7:

Ingredients: the zero-starch and binder-free starter compound feed for shrimp comprised by mass, 30% of Antarctic krill meal, 15% of enzymatically hydrolyzed protein, 37% of oyster, 3% of beer yeast powder, 2% of phospholipid, 1% of fish oil, 1% of vitamin mixture, 2% of mineral element mixture, 3% of chitin, 3% of EPA, and 3% of DHA.
All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 8:

Ingredients: the zero-starch and binder-free starter compound feed for shrimp comprised by mass, 30% of Antarctic krill meal, 15% of enzymatically hydrolyzed protein, 18% of bloodworm, 19% of flesh squid, 3% of beer yeast powder, 2% of phospholipid, 1% of fish oil, 1% of vitamin mixture, 2% of mineral element mixture, 3% of chitin, 3% of EPA, and 3% of DHA.
All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 9:

Ingredients: the zero-starch and binder-free starter compound feed for shrimp comprised by mass, 30% of Antarctic krill meal, 15% of enzymatically hydrolyzed protein, 18% of fairy shrimp, 19% of sandworm, 3% of beer yeast powder, 2% of phospholipid, 1% of fish oil, 1% of vitamin mixture, 2% of mineral element mixture, 3% of chitin, 3% of EPA, and 3% of DHA.
All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 10:

Ingredients: the zero-starch and binder-free starter compound feed for shrimp comprised by mass, 30% of Antarctic krill meal, 15% of enzymatically hydrolyzed protein, 18% of sandworm, 19% of flesh squid, 3% of beer yeast powder, 2% of phospholipid, 1% of fish oil, 1% of vitamin mixture, 2% of mineral element mixture, 3% of chitin, 3% of EPA, and 3% of DHA.

All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to vacuum freeze drying at -80°C (e.g. using liquid nitrogen), homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Comparative example 11:

Ingredients: the zero-starch and binder-free starter compound feed for shrimp comprised by mass, 30% of Antarctic krill meal, 15% of enzymatically hydrolyzed protein, 6% of bloodworm, 3% of beer yeast powder, 6% of earthworm, 6% of fairy shrimp, 7% of fresh squid, 6% of sandworm, 2% of phospholipid, 6% of oyster, 1% of fish oil, 1% of vitamin mixture, 2% of mineral element mixture, 3% of chitin, 3% of EPA, and 3% of DHA.

All the ingredients were pulverized (pulverized via an ultrafine pulverizer or homogenized via a colloid mill) to a size of 400 mesh, mixed completely and evenly, added with water according to a mass ratio of 30:70 (ingredients to water) and stirred for 15 minutes to give a mash, which was then subjected to roller drying, homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

Experiments for effect measurement:

1. Experiment on feeding rate

Fully aerated tap water was added to a 1000 ml beaker. Before the experiment, water was aerated after temperature and salinity were adjusted to predetermined levels in each group. In each group, salinity was adjusted with sea salt starting from a concentration of 6 ppt and increasing or reducing by 4 ppt every 2 hours until it reached the predetermined level. In order to ensure the temperature accurate and controllable, the experiment was conducted in illumination incubators (MGC type) after salinity was adjusted to the predetermined level. Temperature was increased or reduced by 2.0°C every 2 hours starting from 25°C. Penaeus orientalis shrimp were placed in various 1000 ml beakers respectively, 1,000 shrimp each beaker. Photoperiod was set to be 12L: 12D. The water was measured to have a pH value of 8.0-8.5 and dissolved oxygen content of 5.0 mg/L. The starter compound feeds for shrimp were provided from the 8th day (generally, larvae began to feed at the 8th day after they have hatched), 8 times a day. 1 hour after feeding, the feeding rate was measured for each group by collecting 60 shrimp from each beaker, and conducting microscopic examination to inspect their feeding status for calculating the feeding rate (rounded off to the first decimal place). The feeding rate data of the 9th day was taken as the final results (since all the larvae had fed at the 10th day), which were averaged for analysis. A group provided with brine shrimp, which is a natural feed, was taken as control.

$$\text{Feeding rate (\%)} = \text{shrimp that have fed} / \text{total shrimp} \times 100\%$$

Results were as shown in Table 1.

Table 1

| Group | Feeding rate |
|---|---|
| Example 1 | 98.1% |
| Comparative example 1 | 90.6% |
| Comparative example 2 | 70.5% |
| Comparative example 3 | 68.2% |
| Comparative example 4 | 75.8% |
| Comparative example 5 | 72.1% |
| Comparative example 6 | 70.7% |

(continued)

| Group | Feeding rate |
|---|---|
| Comparative example 7 | 75.3% |
| Comparative example 8 | 80.1% |
| Comparative example 9 | 81.2% |
| Comparative example 10 | 80.6% |
| Comparative example 11 | 81.1% |
| Control (brine shrimp) | 85.5% |

As can be seen from Table 1, the starter compound feed for shrimp provided in example 1 gave a feeding rate significantly higher than those in the comparative examples and control group.

2. Growth experiment

a: A breeding experiment was conduct by providing the starter compound feeds for shrimp as provided in the example 1 and comparative examples 1-11 to newly hatched *Penaeus orientalis* shrimp, wherein a group provided with brine shrimp, which is a conventional natural feed, was taken as control.
b: Grouping

Shrimp newly hatching in one time were collected for the experiment, three replicate in each group, and about 2,000 shrimp in each replicate, results of which would be averaged for analysis.
Feeding management is carried out according to that of a regular farm. The feeds were provided regularly every 2-4 hours.
c: Results
The feeding status was inspected to record the time when shrimp began to feed. In order to reduce the error as much as possible, date of the three replicates were respectively recorded by three persons, and the results were averaged.
For each group, the initial total weight and the total weight at day 30 were measured to calculate the weight gain within 30 days.

$$\text{Weight gain (\%)} = 100 \times (\text{final weight - initial weight}) / \text{initial weight}$$

Survival rates at day 45 were calculated. Also, feed efficiency and specific growth rate were calculated.

$$\text{Feed efficiency (\%)} = 100 \times (\text{final weight - initial weight}) / \text{weight of feed}$$

$$\text{Specific growth rate (\%)} = 100 \times (\ln (\text{final weight}) - \ln (\text{initial weight})) / t \text{ (t represents the}$$

number of days the breeding had been conducted)

d: Results were as shown in Table 2.

Table 2

| Group | Shrimp began to feed | Weight gain Day 30 | Survival rate Day 45 | Feed efficiency |
|---|---|---|---|---|
| Example 1 | 36 hours late | 3525% | 97% | 96% |
| Comparative example 1 | 48 hours late | 3235% | 90% | 90% |
| Comparative example 2 | 60 hours late | 3697% | 93% | 93% |

(continued)

| Group | Shrimp began to feed | Weight gain Day 30 | Survival rate Day 45 | Feed efficiency |
|---|---|---|---|---|
| Comparative example 3 | 72 hours late | 3578% | 91% | 92% |
| Comparative example 4 | 84 hours late | 2356% | 92% | 89% |
| Comparative example 5 | 96 hours late | 1980% | 72% | 69% |
| Comparative example 6 | 108 hours late | 3670% | 91% | 93% |
| Comparative example 7 | 120 hours late | 3893% | 93% | 93% |
| Comparative example 8 | 132 hours late | 3512% | 92% | 93% |
| Comparative example 9 | 144 hours late | 3568% | 91% | 90% |
| Comparative example 10 | 156 hours late | 3601% | 90% | 91% |
| Comparative example 11 | 168 hours late | 3257% | 89% | 88% |
| Control (brine shrimp) | 200 hours late | 1456% | 71% | 69% |

As can be concluded from the results (Table 2), the starter compound feeds of the present invention exhibited significant synergy, as the components with their proportions constituted a harmonious organic whole that could increase the feeding rate and significantly increase the attractivity of the feed, and was beneficial to the growth and development of shrimp. Also, the feed exhibited high feed efficiency and could significantly increase the survival rate and growth rate.

3. Experiment on suspensibility and stability

There are generally three states of feed in water: floating on surface, suspended in water, and sinking to bottom. Aquatic animals have different requirements on feed suspensibility due to different living habits. Shrimp larvae mainly live in the upper water, so their feeding area is mainly in the upper water. Due to poor swimming activity and poor feeding ability, newly hatched shrimp larvae are in a continuous feeding state, and thus have higher requirements on sinking speed and stability (ratio of retained dry matter) of the feed in water.
The starter compound feeds of example 1 and comparative examples 1-11 were tested for their suspensibility and stability in water.

a: Test method

(1) Measurement of suspensibility: Suspensibility of a feed is usually determined by measuring suspension ratio: adding 100 mL of distilled water to a 100 mL beaker, weighing out ml (g) of the feed and evenly sprinkling on the distilled water and letting stand for a while; correcting the suspended solids along the surface using a suction pipette, filtering, and drying at 80°C in an oven to constant weight to give m2 (g) of solids.

$$\text{Suspension ratio (\%)} = m2 \, / \, m1 \times 100\%$$

(2) Measurement of stability in water was conducted according to a method of the American Feed Industry Association: weighing out m g of feed, evenly spreading out on a 200-mesh sieve, slowing placing into a glass container containing 40 L of 27°C deionized water; after immersing for one hour, taking out the sieve, drying, and weighing to calculate the ratio of retained dry matter in the feed at different immersing times, three replicates for each group. The stability in water was the ratio of the final dry-matter weight to the initial dry-matter weight, as shown in Table 3 (rounded off to the second decimal place). The starter compound feed of example 1 was further tested for the ratio of retained dry matter in the feed at different immersing times by immersing for 10 minutes, 30 minutes, 1 hour, 2hours, 4 hours, 6 hours and 12 hours, three replicates for each group; the stability in water was the ratio of the final dry-matter weight to the initial dry-matter weight, as shown in Table 4 (rounded off to the second decimal place).

Table 3

| Group | Time | Suspensibility | Stability in water |
|---|---|---|---|
| Example 1 | 10 min | 98.26% | 98.82% |
| Comparative example 1 | 10 min | 82.12% | 83.34% |
| Comparative example 2 | 10 min | 85.78% | 83.57% |
| Comparative example 3 | 10 min | 78.20% | 79.11% |
| Comparative example 4 | 10 min | 83.34% | 83.82% |
| Comparative example 5 | 10 min | 79.21% | 80.74% |
| Comparative example 6 | 10 min | 80.22% | 82.44% |
| Comparative example 7 | 10 min | 90.55% | 89.77% |
| Comparative example 8 | 10 min | 86.61% | 87.73% |
| Comparative example 9 | 10 min | 70.29% | 71.35% |
| Comparative example 10 | 10 min | 72.48% | 73.14% |
| Comparative example 11 | 10 min | 87.24% | 88.49% |

Table 4

| Time | 10 min | 30 min | 1 h | 2 h | 4 h | 6 h | 12 h |
|---|---|---|---|---|---|---|---|
| Suspensibility | 98.26% | 72.34% | 69.72% | 61.97% | 57.12% | 49.75 | 37.58% |
| Stability | 98.82% | 90.14% | 87.79% | 85.01% | 80.06% | 62.41% | 54.18% |

As shown in Table 4, the starter compound feed of the present invention exhibited excellent suspensibility and stability in water, and was basically suspended at the upper region of water, while the other starter compound feeds were basically suspended at the middle region of water.

Example 2:

Ingredients: the zero-starch and binder-free starter compound feed for shrimp comprised by mass, 15% of Antarctic krill meal, 25% of enzymatically hydrolyzed protein, 3% of bloodworm, 5% of beer yeast powder, 5% of earthworm, 10% of fairy shrimp, 5% of fresh squid, 2% of sandworm, 3% of phospholipid, 10% of oyster, 2.5% of fish oil, 2% of vitamin mixture, 1% of mineral element mixture, 4% of chitin, 1% of EPA, and 6% of DHA.

The Antarctic krill meal, enzymatically hydrolyzed protein, bloodworm, beer yeast powder, earthworm, fairy shrimp, fresh squid, sandworm and oyster were pulverized to a size of 235 mesh and evenly mixed with the other ingredients, added with water according to a mass ratio of 25:75 (ingredients to water) and stirred for 10 minutes to give a mash, which was then subjected to vacuum freeze drying at -50°C, homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

The feed of the present example exhibited the characteristics of bioactive feed in all aspects, had rich and balanced nutrients, higher attractivity and high digestibility, promoting growth and improving survival rate.

Example 3:

Ingredients: the zero-starch and binder-free starter compound feed for shrimp comprised by mass, 50% of Antarctic krill meal, 10% of enzymatically hydrolyzed protein, 3% of bloodworm, 2% of beer yeast powder, 5% of earthworm, 4% of fairy shrimp, 5% of fresh squid, 2% of sandworm, 1% of phospholipid, 3% of oyster, 1% of fish oil, 1% of vitamin mixture, 3% of mineral element mixture, 2% of chitin, 5% of EPA, and 3% of DHA.

The Antarctic krill meal, enzymatically hydrolyzed protein, bloodworm, beer yeast powder, earthworm, fairy shrimp, fresh squid, sandworm and oyster were pulverized to a size of 400 mesh and evenly mixed with the other ingredients, added with water according to a mass ratio of 35:65 (ingredients to water) and stirred for 20 minutes to give a mash, which was then subjected to vacuum freeze drying at -100°C, homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

The feed of the present example exhibited the characteristics of bioactive feed in all aspects, had rich and balanced nutrients, higher attractivity and high digestibility, promoting growth and improving survival rate.

Example 4:

Ingredients: the zero-starch and binder-free starter compound feed for shrimp comprised by mass, 30% of Antarctic krill meal, 9% of enzymatically hydrolyzed protein, 10% of bloodworm, 2% of beer yeast powder, 8% of earthworm, 4% of fairy shrimp, 10% of fresh squid, 10% of sandworm, 1% of phospholipid, 3% of oyster, 1% of fish oil, 1% of vitamin mixture, 3% of mineral element mixture, 2% of chitin, 5% of EPA, and 1% of DHA.

The Antarctic krill meal, enzymatically hydrolyzed protein, bloodworm, beer yeast powder, earthworm, fairy shrimp, fresh squid, sandworm and oyster were pulverized to a size of 400 mesh and evenly mixed with the other ingredients, added with water according to a mass ratio of 30:70 (ingredients to water) and stirred for 15 minutes to give a mash, which was then subjected to vacuum freeze drying at -80°C, homogenized, expanded (with an expansion ratio of 16%), spray dried (with an inlet temperature of 175°C and an outlet temperature of 85°C), oven dried (at a temperature of 75°C to 125°C), sifted, and cooled to give the starter compound feed for shrimp.

The feed of the present example exhibited the characteristics of bioactive feed in all aspects, had rich and balanced nutrients, higher attractivity and high digestibility, promoting growth and improving survival rate.

**Claims**

1. A zero-starch and binder-free starter compound feed for shrimp, obtainable by the following method:

   providing ingredients, the ingredients comprising by mass, 15-50% of Antarctic krill meal, 10-25% of enzymatically hydrolyzed protein, 3-10% of bloodworm, 2-5% of beer yeast powder, 5-8% of earthworm, 4-10% of fairy shrimp, 5-10% of fresh squid, 2-10% of sandworm, 1-3% of phospholipid, 3-10% of oyster, 1-2.5% of fish oil, 1-2% of vitamin mixture, 1-3% of mineral element mixture, 2-4% of immune enhancer, 1-5% of EPA, and 1-6% of DHA;
   pulverizing the ingredients, mixing evenly, adding water and stirring to give a mash; vacuum freeze drying the mash at -50°C to -100°C, and then homogenizing, expanding, spray drying, oven drying, sifting, and cooling to give the starter compound feed for shrimp;
   wherein the step of pulverizing the ingredients is performed by pulverizing to a size of 325 to 400 mesh using an ultrafine pulverizer and/or a colloid mill; and the step of adding water and stirring to give the mash is performed by adding water and stirring for 10-20 minutes to give a mash containing by mass 25-35% of the ingredients.

2. The zero-starch and binder-free starter compound feed for shrimp according to claim 1, **characterized in that**, the ingredients comprises by mass 30% of Antarctic krill meal, 15% of enzymatically hydrolyzed protein, 6% of bloodworm, 3% of beer yeast powder, 6% of earthworm, 6% of fairy shrimp, 7% of fresh squid, 6% of sandworm, 2% of phospholipid, 6% of oyster, 1% of fish oil, 1% of vitamin mixture, 2% of mineral element mixture, 3% of chitin, 3% of EPA, and 3% of DHA.

3. The zero-starch and binder-free starter compound feed for shrimp according to claim 1 or 2, **characterized in that**, the step of vacuum freeze drying at -50°C to -100°C is performed by vacuum drying at -80°C.

4. The zero-starch and binder-free starter compound feed for shrimp according to claim 1 or 2, **characterized in that**, the step of expanding is performed by a micro-expansion with an expansion ratio of 16%.

5. The zero-starch and binder-free starter compound feed for shrimp according to claim 1 or 2, **characterized in that**, the step of spray drying is performed with an inlet temperature of 175°C and an outlet temperature of 85°C.

6. The zero-starch and binder-free starter compound feed for shrimp according to claim 1 or 2, **characterized in that**, the step of oven drying is performed with a drying temperature of 75°C to 125°C.

7. The zero-starch and binder-free starter compound feed for shrimp according to claim 1 or 2, **characterized in that**, the immune enhancer is chitin.

8. The zero-starch and binder-free starter compound feed for shrimp according to claim 1 or 2, **characterized in that**,

the vitamin mixture comprises per kilogram: 30 g of vitamin A, 2 g of vitamin D3, 60 g of vitamin E, 4.5 g of vitamin K3, 30 g of vitamin B1, 2 g of vitamin B2, 60 g of vitamin B6, 4.5 g of vitamin B12, 20 g of nicotinic acid, 20 g of calcium pantothenate, 0.15 g of biotin, 150 g of inositol, 4 g of folic acid, and 275 g of vitamin C, with the balance being corncob meal; and
the mineral element mixture comprises per kilogram: 20 g of copper sulfate, 100 g of ferrous sulfate, 35 g of zinc sulfate, 11 g of manganese sulfate, 0.55 g of cobalt chloride, 0.55 g of sodium selenite, 20 g of potassium dihydrogen phosphate, and 20 g of sodium dihydrogen phosphate, with the balance being zeolite powder.

## Patentansprüche

1. Ein stärke- und bindemittelfreies Starter-Mischfutter für Garnelen, das durch das folgende Verfahren erhältlich ist:

Bereitstellen von Zutaten, wobei die Zutaten, bezogen auf die Masse, 15-50 % antarktisches Krillmehl, 10-25 % enzymatisch hydrolisiertes Protein, 3-10 % rote Mückenlarve, 2-5 % Bierhefepulver, 5-8 % Regenwurm, 4-10 % Kiemenfußkrebs, 5-10 % frischen Tintenfisch, 2-10 % Sandwurm, 1-3 % Phospholipid, 3-10 % Auster, 1-2,5 % Fischöl, 1-2 % Vitaminmischung, 1-3 % Mineralstoffmischung, 2-4 % Immunstärker, 1-5 % EPA und 1-6 % DHA, beinhalten;
Pulverisieren der Zutaten, gleichmäßiges Mischen, Hinzufügen von Wasser und Rühren, um einen Brei zu ergeben; Vakuumgefriertrocknen des Breies bei -50 °C bis -100 °C und dann Homogenisieren, Expandieren, Sprühtrocknen, Ofentrocknen, Sieben und Kühlen, um das Starter-Mischfutter für Garnelen zu ergeben;
wobei der Schritt des Pulverisierens der Zutaten durch Pulverisieren auf eine Größe von 325 bis 400 Mesh unter Verwendung eines ultrafeinen Pulverisators und/oder einer Kolloidmühle durchgeführt wird; und der Schritt des Hinzufügens von Wasser und des Rührens, um den Brei zu ergeben, durch Hinzufügen von Wasser und Rühren für 10-20 Minuten durchgeführt wird, um einen Brei zu ergeben, der, bezogen auf die Masse, 25-35 % der Zutaten enthält.

2. Stärke- und bindemittelfreies Starter-Mischfutter für Garnelen gemäß Anspruch 1, **dadurch gekennzeichnet, dass** die Zutaten, bezogen auf die Masse, 30 % antarktisches Krillmehl, 15 % enzymatisch hydrolysiertes Protein, 6 % rote Mückenlarve, 3 % Bierhefepulver, 6 % Regenwurm, 6 % Kiemenfußkrebs, 7 % frischen Tintenfisch, 6 % Sandwurm, 2 % Phospholipid, 6 % Auster, 1 % Fischöl, 1 % Vitaminmischung, 2 % Mineralstoffmischung, 3 % Chitin, 3 % EPA und 3 % DHA beinhalten.

3. Stärke- und bindemittelfreies Starter-Mischfutter für Garnelen gemäß Anspruch 1 oder 2, **dadurch gekennzeichnet, dass** der Schritt des Vakuumgefriertrocknens bei -50 °C bis -100 °C durch Vakuumtrocknen bei -80 °C durchgeführt wird.

4. Stärke- und bindemittelfreies Starter-Mischfutter für Garnelen gemäß Anspruch 1 oder 2, **dadurch gekennzeichnet, dass** der Schritt des Expandierens durch eine Mikroexpansion mit einem Expansionsverhältnis von 16 % durchgeführt wird.

5. Stärke- und bindemittelfreies Starter-Mischfutter für Garnelen gemäß Anspruch 1 oder 2, **dadurch gekennzeichnet, dass** der Schritt des Sprühtrocknens mit einer Einlasstemperatur von 175 °C und einer Auslasstemperatur von 85 °C durchgeführt wird.

6. Stärke- und bindemittelfreies Starter-Mischfutter für Garnelen gemäß Anspruch 1 oder 2, **dadurch gekennzeichnet, dass** der Schritt des Ofentrocknens bei einer Trocknungstemperatur von 75 °C bis 125 °C durchgeführt wird.

7. Stärke- und bindemittelfreies Starter-Mischfutter für Garnelen gemäß Anspruch 1 oder 2, **dadurch gekennzeichnet, dass** der Immunverstärker Chitin ist.

8. Stärke- und bindemittelfreies Starter-Mischfutter für Garnelen gemäß Anspruch 1 oder 2, **dadurch gekennzeichnet, dass**

die Vitaminmischung pro Kilogramm Folgendes beinhaltet: 30 g Vitamin A, 2 g Vitamin D3, 60 g Vitamin E, 4,5 g Vitamin K3, 30 g Vitamin B1, 2 g Vitamin B2, 60 g Vitamin B6, 4,5 g Vitamin B12, 20 g Nikotinsäure, 20 g Calciumpantothenat, 0,15 g Biotin, 150 g Inositol, 4 g Folsäure und 275 g Vitamin C, wobei der Rest Maiskolbenmehl ist; und

die Mineralstoffmischung pro Kilogramm Folgendes beinhaltet: 20 g Kupfersulfat, 100 g Eisensulfat, 35 g Zinksulfat, 11 g Mangansulfat, 0,55 g Kobaltchlorid, 0,55 g Natriumselenit, 20 g Kaliumdihydrogenphosphat und 20 g Natriumdihydrogenphosphat, wobei der Rest Zeolithpulver ist.

## Revendications

1. Un aliment composé de démarrage sans amidon et dépourvu de liant pour crevettes, pouvant être obtenu par le procédé suivant :

    mettre à disposition des ingrédients, les ingrédients comprenant, en masse, de 15 à 50 % de farine de Krill antarctique, de 10 à 25 % de protéine hydrolysée enzymatiquement, de 3 à 10 % de vers de vase, de 2 à 5 % de poudre de levure de bière, de 5 à 8 % de vers de terre, de 4 à 10 % d'anostracés, de 5 à 10 % d'encornets frais, de 2 à 10 % de vers arénicoles, de 1 à 3 % de phospholipide, de 3 à 10 % d'huîtres, de 1 à 2,5 % d'huile de poisson, de 1 à 2 % de mélange de vitamines, de 1 à 3 % de mélange d'éléments minéraux, de 2 à 4 % de stimulateur immunitaire, de 1 à 5 % d'EPA, et de 1 à 6 % de DHA ;
    pulvériser les ingrédients, mélanger de façon uniforme, ajouter de l'eau et remuer pour donner une bouillie ;
    lyophiliser sous vide la bouillie à de -50 °C à -100 °C, et ensuite homogénéiser, dilater, sécher par atomisation, sécher au four, tamiser, et refroidir pour donner l'aliment composé de démarrage pour crevettes ;
    où l'étape consistant à pulvériser les ingrédients est mise en oeuvre en pulvérisant jusqu'à une taille de 325 à 400 mesh à l'aide d'un pulvérisateur ultrafin et/ou d'un moulin à colloïdes ; et l'étape consistant à ajouter de l'eau et à remuer pour donner la bouillie est mise en oeuvre en ajoutant de l'eau et en remuant pendant 10 à 20 minutes pour donner une bouillie contenant, en masse, de 25 à 35 % des ingrédients.

2. L'aliment composé de démarrage sans amidon et dépourvu de liant pour crevettes selon la revendication 1, **caractérisé en ce que** les ingrédients comprennent, en masse, 30 % de farine de Krill antarctique, 15 % de protéine hydrolysée enzymatiquement, 6 % de vers de vase, 3 % de poudre de levure de bière, 6 % de vers de terre, 6 % d'anostracés, 7 % d'encornets frais, 6 % de vers arénicoles, 2 % de phospholipide, 6 % d'huîtres, 1 % d'huile de poisson, 1 % de mélange de vitamines, 2 % de mélange d'éléments minéraux, 3 % de chitine, 3 % d'EPA, et 3 % de DHA.

3. L'aliment composé de démarrage sans amidon et dépourvu de liant pour crevettes selon la revendication 1 ou la revendication 2, **caractérisé en ce que** l'étape consistant à lyophiliser sous vide à de -50 °C à -100 °C est mise en oeuvre en séchant sous vide à -80 °C.

4. L'aliment composé de démarrage sans amidon et dépourvu de liant pour crevettes selon la revendication 1 ou la revendication 2, **caractérisé en ce que** l'étape consistant à dilater est mise en oeuvre par une micro-dilatation avec un taux de dilatation de 16 %.

5. L'aliment composé de démarrage sans amidon et dépourvu de liant pour crevettes selon la revendication 1 ou la revendication 2, **caractérisé en ce que** l'étape consistant à sécher par atomisation est mise en oeuvre avec une température d'entrée de 175 °C et une température de sortie de 85 °C.

6. L'aliment composé de démarrage sans amidon et dépourvu de liant pour crevettes selon la revendication 1 ou la revendication 2, **caractérisé en ce que** l'étape consistant à sécher au four est mise en oeuvre avec une température de séchage de 75 °C à 125 °C.

7. L'aliment composé de démarrage sans amidon et dépourvu de liant pour crevettes selon la revendication 1 ou la revendication 2, **caractérisé en ce que** le stimulateur immunitaire est la chitine.

8. L'aliment composé de démarrage sans amidon et dépourvu de liant pour crevettes selon la revendication 1 ou la revendication 2, **caractérisé en ce que**,

    le mélange de vitamines comprend par kilogramme : 30 g de vitamine A, 2 g de vitamine D3, 60 g de vitamine E, 4,5 g de vitamine K3, 30 g de vitamine B1, 2 g de vitamine B2, 60 g de vitamine B6, 4,5 g de vitamine B12, 20 g d'acide nicotinique, 20 g de pantothénate de calcium, 0,15 g de biotine, 150 g d'inositol, 4 g d'acide folique, et 275 g de vitamine C, le reste étant de la farine de rafle de maïs ; et

le mélange d'éléments minéraux comprend par kilogramme : 20 g de sulfate de cuivre, 100 g de sulfate ferreux, 35 g de sulfate de zinc, 11 g de sulfate de manganèse, 0,55 g de chlorure de cobalt, 0,55 g de sélénite de sodium, 20 g de dihydrogénophosphate de potassium, et 20 g de dihydrogénophosphate de sodium, le reste étant de la poudre de zéolite.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107518210 A
- CN 108065132 A
- CN 105231088 A